# EUROPEAN PATENT APPLICATION

(11) **EP 2 439 637 A1**
(43) Date of publication of application: **11.04.2012**
(21) Application number: 10186913.9
(22) Date of filing: 07.10.2010
(51) Int. Cl.: G06F 9/445, G06F 9/455, H04L 12/46, H04L 29/08, G06F 9/50

(54) **Method and system of providing access to a virtual machine distributed in a hybrid cloud network**

(71) Applicant: Deutsche Telekom AG, 53113 Bonn (DE); Technische Universität Berlin, 10623 Berlin (DE); Zimory GmbH, 10243 Berlin (DE)
(72) Inventor: Offermann, Philipp, 10717 Berlin (DE); Schönherr, Marten, 12524 Berlin (DE); Ahrens, Maximilian, 10405 Berlin (DE)
(74) Representative: Vossius & Partner

(57) **Abstract**

The present invention provides a method of providing access to a virtual machine distributed in a hybrid cloud network, wherein the hybrid cloud network comprises an internal network having a first management component and an external network having a second management component, wherein the internal and external network being connected through a data connection over the internet, wherein the method comprises steps of: a) tunnelling the data connection using an OSI layer 2 provider provisioned virtual private network; b) routing the access from the internal network to the virtual machine. The present invention also provides a system of providing access to a virtual machine distributed in a hybrid cloud network.

## Description

### Technical Field

The present invention relates to a method and a system for hybrid cloud distributed virtual machine management services over a virtual private network.

### Background of the invention

Most business functions in commerce and administration are supported by IT systems. These systems often are connected via an intranet that is internal to a company/government body. If the business functions are performed across several sites, these internal networks have to be inter-connected. This can be done either by using dedicated lines between the sites, or by tunnelling over an existing and possibly public network. Tunnelling involves adding an envelope to a data package that is treated separately. Thereby, the content can be encrypted and the package routed along a predetermined path in the network. For example, virtual private network technology can be used for tunnelling through the Internet. A virtual private network, i.e. a VPN is a computer network layered on top of an underlying computer network. The private nature of a VPN means that the data travelling over the VPN is not generally visible to, or is encapsulated from, the underlying network traffic. Similarly, the traffic within the VPN appears to the underlying network as just another traffic stream to be passed. A VPN connection can be envisioned as a "pipe within a pipe", with the outer pipe being the underlying network connection.

Network traffic is often managed on the Open System Interconnection Reference Model layer 3, abbreviated as OSI Reference Model layer 3 or OSI Model layer 3. The OSI Model is an abstract description for layered communications and computer network protocol design. It was developed as part of the Open Systems Interconnection initiative. In its most basic form, it divides network architecture into seven layers which, from top to bottom, are the Application, Presentation, Session, Transport, Network, Data Link, and Physical Layers. It is therefore often referred to as the OSI Seven Layer Model. For achieving transparent tunnelling from the OSI layer 3 perspective, i.e. network layer, a VPN has to be created on OSI layer 2, i.e. data link layer. Thereby, the tunnelling is transparent from the user perspective, as the same IP address space can be used. Common protocols are Multiprotocol Label Switching, MPLS and Layer 2 Tunnelling Protocol, L2TP.

MPLS is a mechanism in high-performance telecommunications networks which directs and carries data from one network node to the next. MPLS makes it easy to create "virtual links" between distant nodes. It can encapsulate packets of various network protocols. MPLS is a highly scalable, protocol agnostic, data-carrying mechanism. In an MPLS network, data packets are assigned labels. Packet-forwarding decisions are made solely on the contents of this label, without the need to examine the packet itself. This allows one to create end-to-end circuits across any type of transport medium, using any protocol. The primary benefit is to eliminate dependence on a particular Data Link Layer technology, such as ATM, frame relay, SONET or Ethernet, and eliminate the need for multiple Layer 2 networks to satisfy different types of traffic. L2TP is a tunnelling protocol used to support VPNs. It does not provide any encryption or confidentiality by itself; it relies on an encryption protocol that it passes within the tunnel to provide privacy. The entire L2TP packet, including payload and L2TP header, is sent within a UDP datagram. It is common to carry Point-to-Point Protocol (PPP) sessions within an L2TP tunnel. L2TP does not provide confidentiality or strong authentication by itself. IPsec is often used to secure L2TP packets by providing confidentiality, authentication and integrity. The combination of these two protocols is generally known as L2TP/IPsec.

To provide IT services, servers are used. For resource efficiency reasons, these servers can be virtualised. Virtualisation is based on a virtual machine monitor software component, which runs on the server hardware and virtualises physical resources, thereby offering guest system an environment that looks like a physical host from the guest systems point of view. It allows running multiple operating systems and their applications on the same physical server, on top of the virtual machine monitor. Each operating system and its applications are said to be running within a virtual machine, VM. Common technologies used as virtual machine monitors are Xen and VMware. If VMs are to be run internal to a company/government body, the hardware resources running the VMs have to be provided internally. Otherwise, VMs can be run by third parties and accessed over a public network, e.g. the Internet. To manage VMs from distributed data centres, internal and external to a company/government body, hybrid cloud management tools can be used. The management functionalities include an authentication and authorization system, the ability to create, start, stop and delete VMs as well as to migrate VMs from one data centre to another.

Creating a virtual machine involves generating an image of a hard disk that is bootable and configuring a virtual machine environment with parameters like vCPUs, RAM, network configuration and computing power. Starting a VM involves creating a virtual machine environment on the host system and booting an image in this environment. Stopping a VM involves shutting down a guest system running and destroying the virtual machine environment. Deleting a virtual machine involves deleting the disk image and the environment configuration. Migrating a VM involves copying a hard disk image and the environment configuration from one host system to another.

Additional management functionalities are the definition of service level agreements, SLA and the assignment of an SLA to a VM as well as billing functionalities. Thereby, the user can run a VM in any connected data centre and migrate between the centres. Such technology is available e.g. from Zimory GmbH, Eucalyptus Systems and the OpenNebula Project.

Cloud services are a service that is offered in a way that the used infrastructure is transparent to the user. For virtual machine management, this implies that the user is completely unaware of the underlying hardware infrastructure. This stands in contrast to conventional virtual machine management, where a virtual machine is explicitly provisioned on a specific physical host. Hybrid cloud services combine physical resources that are publicly available on the Internet with resources that are internal to a company / government body.

More and more companies/government bodies run the physical resources in their data centre in a virtualised way. Some data centres even abstract from the physical infrastructure. That means that for the user the physical resource used is transparent. However, all VMs still run on physical resources internal to a company. Therefore, if the physical resources are exhausted, no further VMs can be started. Companies/government bodies can also run and manage their VMs at a third-party data centre. If a secure connection is required, a Virtual Private Network (VPN) might be used. Such a service is available e.g. from Amazon with their Elastic Compute Cloud (EC2) and Virtual Private Cloud (VPC) offerings respectively. In this case, the connection between a company network and the remote VM is established over the Internet. No guarantee can be given about the QoS of the connection used, i.e. bandwidth, delay, jitter and packet loss.

US 2008/0201414 A1 relates to transferring a virtual machine from a remote server computer for local execution by a client computer. It concerns the transfer of a virtual machine to a client computer system and back to a server computer system.

EP 2 019 358 A1 relates a method and a system for the creation and deployment of a virtual machine appliance on virtualised servers. It describes a method and a system to efficiently create and deploy virtual machine appliances and includes a management portal being run on a management server. By using the method and system, speed and reliability of VM provisioning is improved.

EP 2 043 320 B1 relates to a method and a system for automatic and remote server provisioning using virtual machine appliances. It describes a method and a system for provisioning virtual machine appliances on remote systems. This is essential for hybrid cloud management, as VMs have to be deployed on distributed data centres.

US 2008/0222375 A1 describes a method and a system for quickly migrating a virtual machine appliance from one host to another. This is especially useful for fast VM migration between distributed data centres, as the time between stopping a machine and starting the migrated version can be minimised.

EP 1 962 192 A1 relates to a method and a system for transparent migration of virtual machine storage which is similar to US 2008/0222375 A1.

JP 2009/064211 A1 describes a system that combines virtual machine technology with virtual private network. However, the focus of the patent is on reducing the load of an application system.

US 2007/0211739 A1 relates to a system and a method for automated access to data management servers. To achieve this, virtual machines are used to establish VPN connections.

It is currently not possible to connect internally and externally hosted resources for virtual machines and to seamlessly manage virtual machines on the data centres, migrate between them and in addition still guarantee quality of service, QoS. If virtual resources are distributed, currently the management of the resources is inefficient. Such management has to take into account the properties of the resources as well as the quality of service of the communication channel between a user and the resource, that is QoS for networks paths includes bandwidth, delay, jitter and packet loss. In a distributed environment, currently, the coordination of all these parameters has to be done manually, thereby increasing costs and setup time.

### Summary of the invention

Therefore, there is a need for the user to be able to specify all properties concerning a virtual machine and the connection to the virtual machine. Moreover, a virtual machine should be provisioned automatically according to the requirements. In other word there is a need of providing the possibility to define required resources independently of the hardware infrastructure properties, including physical host machines and network connections. The resources may be moved between physical host machines in different data centres, internal and external to a company, as required, seamlessly and transparent to the user and thereby to reduce the cost.

The invention provides a system and method that offers a company/government body the possibility to manage, migrate and access VMs in their intranet from the appliance itself, from internal virtualised resources and from third party providers as if they would be hosted in the intranet. Thereby, via the third party provider, scalable CPU, RAM and storage resources can be provided transparently to the user, as if the resources were available on the intranet. By controlling both ends of an OSI Layer 2 VPN, network path QoS can be managed and guaranteed even for externally hosted resources.

These above objects may be obtained by the features of the independent claims.

The present invention discloses a method of providing access to a virtual machine distributed in a hybrid cloud network, wherein the hybrid cloud network comprises an internal network having a first management component and an external network having a second management component, wherein the internal and external network being connected through a data connection over the internet, wherein the method comprises the steps of: a) tunnelling the data connection using an OSI layer 2 provider provisioned virtual private network; b) routing the access from the internal network to the virtual machine.

According to a preferred embodiment of the present invention, the method may further comprise the step of: maintaining an address list comprising a plurality of network addresses reserved to the internal network and to the first and the second management component, by the first management component.

According to a preferred embodiment of the present invention, the step b) further may comprise the step of: assigning a network address to the virtual machine.

According to a preferred embodiment of the present invention, before the step b) the method may further comprise the step of: defining the location of the virtual machine according to network preference information. The network preference information may comprise e.g. information about usage of the physical resources in the internal and external network and/or Quality of Service requirements for the data connection for hosting the access of the virtual machine.

According to a preferred embodiment of the present invention, the step b) further may comprise the steps of: b1) migrating the virtual machine from the external network to the internal network if the Quality of Service requirements of the virtual machine exceeds that the data connection provides, and managing the access from the internal network to the virtual machine in the internal network; or b1) migrating the virtual machine from the internal network to the external network if the usage of the physical resource in the internal network exceed a predefined value, and managing the access from the internal network to the virtual machine in the external network over the data connection.

The first or the second management component may assign a particular internet protocol address, i.e. IP address to the virtual machine. This IP address may be maintained unchanged even if the location of the virtual machine has been changed, e.g. the virtual machine has been migrated from the internal network to the external network due to the high load of the computer appliances hosting the virtual machine in the internal network, or the virtual machine has been migrated from the external network to the internal network because the available bandwidth of the data connection can not fulfil the requirement of the access to the virtual machine as defined by a user or in a service preference parameter. In other word, the virtual machine may be dynamically distributed in the hybrid network - either in the internal network or in the external network, without the need of changing its IP address. The IP address of the virtual is therefore transparent to the end user. It may save reconfiguration of the application which accesses the virtual machine, or it may also save an update on the naming system such as DNS server which provides the IP address of the virtual machine to a client. This is one of the preferred advantages of using the layer 2 provider provisioned virtual private network according to the present invention.

According to a preferred embodiment of the present invention, the first management component comprises a first application programming interface, and the second management component comprises a second application programming interface.

According to a preferred embodiment of the present invention, a first and a second virtual private network router are located in the internal and the external network, respectively, and wherein the data connection is established between the first and the second virtual private network router.

According to a preferred embodiment of the present invention, the method may further comprise the steps of managing the Quality of Service of the data connection by the first and/or the virtual private network router.

According to a preferred embodiment of the present invention, the internal network is an intranet connecting an internal data centre, and the external network is a third party network connecting a third party data centre.

According to a preferred embodiment of the present invention, the data connection is tunnelled using Multiprotocol Label Switching and/or Layer 2 Tunnelling Protocol.

According to a further aspect, the present invention also discloses a system for providing an access from an intranet to a virtual machine distributed in a hybrid cloud network, wherein the system comprises: at least a management component and at least a computer appliance for hosting the virtual machine. The system is configured to be connectable to the intranet via a data connection over the internet. The data connection is tunnelled by using an OSI layer 2 provider provisioned virtual private network.

According to a preferred embodiment of the present invention, the system is adapted to define the location of the virtual machine according to network preference information. The network preference information may comprise e.g. information about usage of the physical resources in the intranet and the system and/or Quality of Service requirements for the data connection for hosting the access of the virtual machine.

According to a preferred embodiment of the present invention, the system is adapted to migrate the virtual machine from the system to the intranet if the Quality of Service requirements of the virtual machine exceeds that the data connection provides; and to manage the access from the intranet to the virtual machine in the intranet; or to migrate the virtual machine from the intranet to the system if the usage of the physical resource in the intranet exceed a predefined value; and to manage the access from the intranet to the virtual machine in the system over the data connection.

According to a further aspect, the present invention also discloses a system for providing an access to a virtual machine distributed in a hybrid cloud network, wherein the hybrid cloud network comprises an internal network and an external network, wherein the system comprises: a first and a second management component located in the internal and the external network, respectively; a data connection over the internet between the internal and external network. The system is adapted to route the access to the virtual machine and the data connection being an OSI layer 2 provider provisioned virtual private network connection.

According to a preferred embodiment of the present invention, the system is adapted to maintain an address list comprising a plurality of network addresses reserved to the internal network and to the first and the second management component, by the first management component. The system may be adapted to assign a network address to the virtual machine.

According to a preferred embodiment of the present invention, the system is adapted to define the location of the virtual machine according to network preference information. The network preference information comprises information about usage of the physical resources in the intranet and the system and/or Quality of Service requirements for the data connection for hosting the access of the virtual machine.

According to a preferred embodiment of the present invention, wherein the system is adapted to migrate the virtual machine from the external network to the internal network if the Quality of Service requirements of the virtual machine exceeds that the data connection provides; and to manage the access from the internal network to the virtual machine in the internal network; or to migrate the virtual machine from the internal network to the external network if the usage of the physical resource in the internal network exceed a predefined value; and to manage the access from the internal network to the virtual machine in the external network over the data connection.

According to a preferred embodiment of the present invention, the first management component comprises a first application programming interface, and the second management component comprises a second application programming interface.

According to a preferred embodiment of the present invention, the system further comprises a first and a second virtual private network router being located in the internal and the external network, respectively. The data connection is preferably established between the first and the second virtual private network router.

According to a preferred embodiment of the present invention, the system is further adapted to manage the Quality of Service of the data connection using the first and/or the virtual private network router.

According to a preferred embodiment of the present invention, the internal network is an intranet connecting an internal data centre, and the external network is a third party network connecting a third party data centre.

Several further preferred advantages and effects of the present invention in comparison with the state of the art may be summarised as the follows:

In the state of the art, the internal and external cloud resources are separated and each user has their own technologies and administration interfaces. The present invention enables that a user has one point for all cloud computing VM provisioning requests, internally and externally hosted. This is realised by the integration of internal and external resources using a combination of hybrid cloud management software and OSI layer 2 provider provisioned virtual private network, PPVPN.

In the state of the art, the third party data centres are not integrated with a company's intranet. The present invention provides the possibility that third party data centres can be integrated seamlessly in the existing network infrastructure and behave like internal data centres. This can be archived by using a single cloud management interface to manage internal and external resources and using OSI layer 2 PPVPN to maintain a homogenous IP network over all resources.

In the state of the art, if internal virtualised resources are exhausted, no more virtual machines can be provisioned. The present invention enables that the request for more VM resources than internally available can be fulfilled transparently to the user, as virtual machines can be provisioned in a third party data centre which is connected via an OSI layer 2 PPVPN. Thereby, from a single user's perspective, resources appear to be unlimited. This can be archived by using a single cloud management interface to manage internal and external resources and using OSI layer 2 PPVPN to maintain a homogenous IP network over all resources.

In the state of the art, the quality of service for third party data centres, e.g. bandwidth, delay, jitter and packet loss, cannot be guaranteed. The present invention may guarantee the QoS by managing both ends of the PPVPN connection. This can be realised by integration of QoS management of an PPVPN, e.g. MPLS, with resource management of the management component.

In the state of the art, the data centre best matching the requirement needs to be selected manually. According to the present invention, the virtual machine can automatically be provisioned in a data centre depending on requested resources and quality of service, thereby optimising resource allocation and costs. This can be achieved by managing of network QoS parameters from a central VM management component.

### Brief description of the Figures

Fig. 1 shows a physical computer appliance comprising a VPN router, a management component and optionally CPU, RAM and storage.
Fig. 2 shows the network setup scenario according to the present invention, wherein the internal network is connected via VPN over the internet with the third party network, and wherein the internal network comprises the company intranet, internal data centre and a computer appliance as shown in Fig. 1.

### Detailed description of the invention

Hereinafter the present invention will be described in connection with the figures.

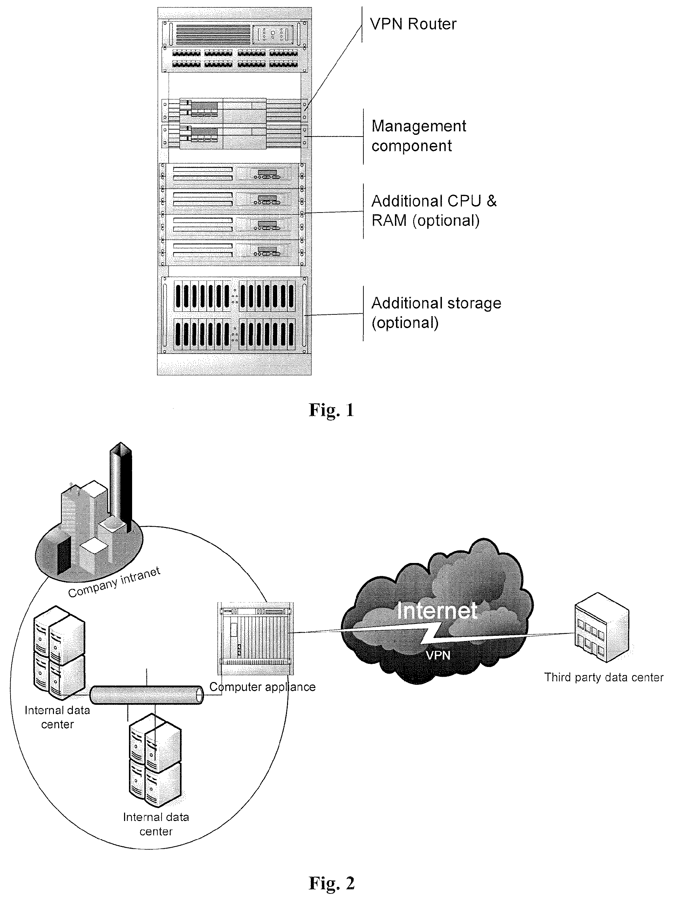

Fig. 1 shows a physical computer appliance comprising a management component being adapted to manage virtual machines from different data centres. According to the present invention, the system further comprises a component that establishes an OSI Layer 2 VPN to the third party provider. The protocol for the connection may be MPLS.

Fig. 2 shows the connection between the internal network and the third party network. The VPN router is able to manage the quality of service of the connection to the third party provider, e.g. bandwidth, delay, jitter and packet loss. Additional data centres in the intranet can be managed as well. The appliance may contain additional components that provide CPU and storage and act as a data centre, see Fig. 1. That data centre is also managed by the central management component.

The central management component knows the network address of all data centre management component APIs (API = application program interface). Via this API, it can copy VM images from and to these data centres. It can request a data centre to configure a VM with resources such as vCPUs, HDD, RAM, and to start and stop a VM. Also, the central management components knows the network address of the OSI Layer 2 VPN management component API. Via this API, it can configure network paths with certain QoS parameters. A network path determines the route packages take through a networks. E.g. for MPLS, packages are encapsulated in an MPLS package with a specific label. MPLS routers in the network are configured to route these packages to predetermined routers. Thereby, packages always take the same, predetermined route through the network. As the route is known, the underlying network, incl. its QoS parameters, is known. Also, bandwidth between these routers can be reserved for the packages. Moreover, QoS requirements may comprises round-trip time of a package and/or Jitter of the network connection.

The data centre management component provides an API to the central management component. It manages all physical resources within a data centre. It can assign resources to a VM and start and stop a VM. On the VPN router, an API enables the configuration of network path QoS parameters. Such a network path determines the route through a network, e.g. the Internet, which is used to establish a VPN connection between two VPN routers. Usually, this is an MPLS path through the Internet.

The data centre management components and the VPN routers publish available resources and quality parameters to the central management component via the API. Thereby the central management component can provision VMs according to available and requested resources.

The method and the system according to the present invention may be set up as follows: The physical computer appliance is setup in a way that the central management component manages the locally available resources and the VPN router, including the QoS parameters for a VPN connection. Every data centre is equipped with a data centre management component. Each of the systems is registered in the central management component so that the central management component can manage VMs in the data centre.

Also, every data centre that is integrated via VPN needs to setup a VPN router on their side. The VPN router in the physical computer appliance and the VPN router in the data centre are set-up such that they can establish a VPN connection. The VPN router is registered with the central management component. The OSI Layer 2 VPN is established as follows: Within the internal network IP range of the intranet the computer appliance is placed in, a certain range is reserved for the appliance. Within the intranet, the IP range is routed to the computer appliance. The management component then assigns IP addresses to VMs. Such a VM might be hosted in a third party data centre. In that case, the IP is automatically routed over the VPN to the remote data centre, where it is routed to the appropriate VM.

The usage scenario of the system and method according to the present invention may be shown exemplarily as follows: If a user wants to start a VM, he accesses the system via the Web site of the central management component. He then selects a VM appliance of his choice and configures it according to his requirements. The requirements might include VM-specific resources such as RAM, virtual CPU, computing power, disk size and uptime and network path specific QoS requirements such as bandwidth, delay, jitter and packet loss. He then requests to start the VM. The management component decides where to provision the VM. The decision can be based on the capability to fulfil the requirements and on the costs. E.g. if a low delay has been requested, the VM is provisioned in an internal data centre near to the user. If the physical resources of the internal data centre are exhausted, e.g. no more computing power or RAM is available, the management component might provision the VM in a third-party data centre. Due to the OSI layer 2 VPN, the location where the VM is running is transparent to the user. The management component informs the user about the IP address assigned to the VM. The user can then access the VM.

If the user requires one of his VMs to have a shorter delay, he accesses the system via the Web site of the management component. In the management component, he reconfigures the VM setting. The management component then checks if the QoS requirement can be met. Possibly, the VPN connection is reconfigured to enable the shorter packet roundtrip time. Possibly, the management component has to migrate the VM from a third party data centre to an internal data centre that is physically nearer to the user. The IP address of the VM then automatically gets rerouted to that data centre. After the migration, the user can access the VM as before, but with the shorter delay.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

## Claims

1. Method of providing access to a virtual machine distributed in a hybrid cloud network, wherein the hybrid cloud network comprises an internal network having a first management component and an external network having a second management component, wherein the internal and external network being connected through a data connection over the internet, wherein the method comprises the steps of:
a) tunnelling the data connection using an OSI layer 2 provider provisioned virtual private network;
b) routing the access from the internal network to the virtual machine.

2. Method according to claim 1,
wherein the method further comprises step of: maintaining an address list comprising a plurality of network addresses reserved to the internal network and to the first and the second management component, by the first management component;
wherein the step b) further comprises the step of: assigning a network address to the virtual machine.

3. Method according to claims 1 or 2, wherein before the step b) the method further comprises the step of: defining the location of the virtual machine according to network preference information;
wherein the network preference information comprises information about usage of the physical resources in the internal and external network and/or Quality of Service requirements for the data connection for hosting the access of the virtual machine.

4. Method according to claim 3, wherein the step b) further comprises the steps of:
b1) migrating the virtual machine from the external network to the internal network if the Quality of Service requirements of the virtual machine exceeds that the data connection provides, and managing the access from the internal network to the virtual machine in the internal network; or
b1) migrating the virtual machine from the internal network to the external network if the usage of the physical resource in the internal network exceed a predefined value, and managing the access from the internal network to the virtual machine in the external network over the data connection.

5. Method according to any one of the preceding claims, wherein the first management component comprises a first application programming interface, and the second management component comprises a second application programming interface.

6. Method according to any one of the preceding claims, wherein a first and a second virtual private network router are located in the internal and the external network, respectively, and wherein the data connection is established between the first and the second virtual private network router.

7. Method according to any one of the preceding claims, wherein the method further comprises the steps of managing the Quality of Service of the data connection by the first and/or the virtual private network router.

8. Method according to any one of the preceding claims, wherein the internal network is an intranet connecting an internal data centre, and the external network is a third party network connecting a third party data centre.

9. Method according to any one of the preceding claims, wherein the data connection is tunnelled using Multiprotocol Label Switching and/or Layer 2 Tunnelling Protocol.

10. System for providing an access from an intranet to a virtual machine distributed in a hybrid cloud network, wherein the system comprises:
at least a management component;
a computer appliance for hosting the virtual machine;
wherein the system is configured to be connectable to the intranet via a data connection over the internet; and wherein the data connection is tunnelled by using an OSI layer 2 provider provisioned virtual private network.

11. System according to claim 10, wherein the system is adapted to define the location of the virtual machine according to network preference information;
wherein the network preference information comprises information about usage of the physical resources in the intranet and the system and/or Quality of Service requirements for the data connection for hosting the access of the virtual machine.

12. System according to claim 11,
wherein the system is adapted to migrate the virtual machine from the system to the intranet if the Quality of Service requirements of the virtual machine exceeds that the data connection provides; and to manage the access from the intranet to the virtual machine in the intranet; or
wherein the system is adapted to migrate the virtual machine from the intranet to the system if the usage of the physical resource in the intranet exceed a predefined value; and to manage the access from the intranet to the virtual machine in the system over the data connection.

13. System for providing an access to a virtual machine distributed in a hybrid cloud network, wherein the hybrid cloud network comprises an internal network and an external network, wherein the system comprises:
a first and a second management component located in the internal and the external network, respectively;
a data connection over the internet between the internal and external network;
wherein the system being adapted to route the access to the virtual machine; and wherein the data connection being an OSI layer 2 provider provisioned virtual private network connection.

14. System according to claim 13,
wherein the system is adapted to maintain an address list comprising a plurality of network addresses reserved to the internal network and to the first and the second management component, by the first management component;
wherein the system is adapted to assign a network address to the virtual machine.

15. System according to claims 13 or 14, wherein the system is adapted to define the location of the virtual machine according to network preference information;
wherein the network preference information comprises information about usage of the physical resources in the intranet and the system and/or Quality of Service requirements for the data connection for hosting the access of the virtual machine.

16. System according to claim 15, wherein the system is adapted to:
migrate the virtual machine from the external network to the internal network if the Quality of Service requirements of the virtual machine exceeds that the data connection provides; and to manage the access from the internal network to the virtual machine in the internal network; or
migrate the virtual machine from the internal network to the external network if the usage of the physical resource in the internal network exceed a predefined value; and to manage the access from the internal network to the virtual machine in the external network over the data connection.

17. System according to any one of claims 13-16, wherein the first management component comprises a first application programming interface, and the second management component comprises a second application programming interface.

18. System according to any one of claims 13-17, wherein the system further comprises a first and a second virtual private network router being located in the internal and the external network, respectively; and wherein the data connection is established between the first and the second virtual private network router.

19. System according to any one of claims 13-18, wherein the system is further adapted to manage the Quality of Service of the data connection using the first and/or the virtual private network router.

20. System according to any one of claims 13-19, wherein the internal network is an intranet connecting an internal data centre, and the external network is a third party network connecting a third party data centre.

## Amended claims

### Amended claims in accordance with Rule 137(2) EPC.

**1.** Method of providing access to a virtual machine distributed in a hybrid cloud network, wherein the hybrid cloud network comprises an internal network having a first management component and an external network having a second management component, wherein the internal and external network being connected through a data connection over the internet, wherein the method comprises the steps of:
a) tunnelling the data connection using an OSI layer 2 provider provisioned virtual private network;
b) routing the access from the internal network to the virtual machine.

**2.** Method according to claim 1,
wherein the method further comprises step of: maintaining an address list comprising a plurality of network addresses reserved to the internal network and to the first and the second management component, by the first management component;
wherein the step b) further comprises the step of: assigning a network address to the virtual machine.

**3.** Method according to claims 1 or 2, wherein before the step b) the method further comprises the step of: defining the location of the virtual machine according to network preference information;
wherein the network preference information comprises information about usage of the physical resources in the internal and external network and/or Quality of Service requirements for the data connection for hosting the access of the virtual machine.

**4.** Method according to claim 3, wherein the step b) further comprises the steps of:
b1) migrating the virtual machine from the external network to the internal network if the Quality of Service requirements of the virtual machine exceeds that the data connection provides, and managing the access from the internal network to the virtual machine in the internal network; or
b1) migrating the virtual machine from the internal network to the external network if the usage of the physical resource in the internal network exceed a predefined value, and managing the access from the internal network to the virtual machine in the external network over the data connection.

**5.** Method according to any one of the preceding claims, wherein the first management component comprises a first application programming interface, and the second management component comprises a second application programming interface.

**6.** Method according to any one of the preceding claims, wherein a first and a second virtual private network router are located in the internal and the external network, respectively, and wherein the data connection is established between the first and the second virtual private network router.

**7.** Method according to any one of the preceding claims, wherein the method further comprises the steps of managing the Quality of Service of the data connection by the first and/or the virtual private network router.

**8.** Method according to any one of the preceding claims, wherein the internal network is an intranet connecting an internal data centre, and the external network is an extranet connecting an external data centre.

**9.** Method according to any one of the preceding claims, wherein the data connection is tunnelled using Multiprotocol Label Switching and/or Layer 2 Tunnelling Protocol.

**10.** System for providing an access to a virtual machine distributed in a hybrid cloud network, wherein the system comprises:
at least a management component;
a computer appliance for hosting the virtual machine;
wherein the system is configured to be connectable to the intranet via a data connection over the internet; and wherein the data connection is tunnelled by using an OSI layer 2 provider provisioned virtual private network.

**11.** System according to claim 10, wherein the system is adapted to define the location of the virtual machine according to network preference information;
wherein the network preference information comprises information about usage of the physical resources in the intranet and the system and/or Quality of Service requirements for the data connection for hosting the access of the virtual machine.

**12.** System according to claim 11,
wherein the system is adapted to migrate the virtual machine from the system to the intranet if the Quality of Service requirements of the virtual machine exceeds that the data connection provides; and to manage the access from the intranet to the virtual machine in the intranet; or
wherein the system is adapted to migrate the virtual machine from the intranet to the system if the usage of the physical resource in the intranet exceed a predefined value; and to manage the access from the intranet to the virtual machine in the system over the data connection.

**13.** System according to any one of claims 10-11, wherein the hybrid cloud network comprises an internal network and an external network, wherein the system comprises:
a first and a second management component located in the internal and the external network, respectively;
wherein the data connection is over the internet between the internal and external network; and
wherein the system being adapted to route the access to the virtual machine.

**14.** System according to claim 13,
wherein the system is adapted to maintain an address list comprising a plurality of network addresses reserved to the internal network and to the first and the second management component, by the first management component;
wherein the system is adapted to assign a network address to the virtual machine.

**15.** System according to claim 14, wherein the system is adapted to:
migrate the virtual machine from the external network to the internal network if the Quality of Service requirements of the virtual machine exceeds that the data connection provides; and to manage the access from the internal network to the virtual machine in the internal network; or
migrate the virtual machine from the internal network to the external network if the usage of the physical resource in the internal network exceed a predefined value; and to manage the access from the internal network to the virtual machine in the external network over the data connection.

**16.** System according to any one of claims 13-15, wherein the first management component comprises a first application programming interface, and the second management component comprises a second application programming interface.

**17.** System according to any one of claims 13-16, wherein the system further comprises a first and a second virtual private network router being located in the internal and the external network, respectively; and wherein the data connection is established between the first and the second virtual private network router.

**18.** System according to any one of claims 13-17, wherein the system is further adapted to manage the Quality of Service of the data connection using the first and/or the virtual private network router.

**19.** System according to any one of claims 13-18, wherein the internal network is an intranet connecting an internal data centre, and the external network is an extranet connecting an external data centre.
